Europäisches Patentamt

European Patent Office

Office européen des brevets

(19)

(11) **EP 0 821 516 A2**

(12) **EUROPEAN PATENT APPLICATION**

(43) Date of publication:
28.01.1998 Bulletin 1998/05

(51) Int. Cl.⁶: **H04N 1/32**

(21) Application number: 97112544.8

(22) Date of filing: 22.07.1997

(84) Designated Contracting States:
AT BE CH DE DK ES FI FR GB GR IE IT LI LU MC
NL PT SE

(30) Priority: 23.07.1996 JP 193698/96

(71) Applicant:
**Murata Kikai Kabushiki Kaisha**
**Minami-ku, Kyoto-shi, Kyoto (JP)**

(72) Inventor: **Kuwahara, Tetsuya**
**Kyoto-shi, Kyoto (JP)**

(74) Representative:
**Liedl, Christine, Dipl.-Chem. et al**
**Albert-Rosshaupter-Strasse 65**
**81369 München (DE)**

(54) **Communication terminal device**

(57)     A communication terminal device (1) receives an image signal from a remote facsimile machine. The remote facsimile machine is adapted to send information (172) about the remote facsimile machine before the communication terminal device (1) accepts the image signal. The communication terminal device (1) has a memory (17), an encoder (18) and a printer (23). The communication terminal device (1) has already stored information about a plurality of remote facsimile machines in the memory (17). The encoder encodes the image signal prior to printing when the information about the remote facsimile machine sent from the remote facsimile machine coincides with one of the information stored in the memory (17). The printer (23) then prints the encoded image signal on a recording sheet (P).

EP 0 821 516 A2

## Description

The present invention relates to a communication terminal device and more particularly to a communication terminal device such as a facsimile device and a personal computer having facsimile communication functions which enable encoding and printing out of received image data.

A function known as secure mail is one of the non-standard functions of facsimile communication. This function can briefly be explained as follows: a communication terminal device having facsimile communication functions stores received image data in a memory and does not expose the transmitted details to some person other than the intended recipient (or the one who knows the code number) by printing out or displaying the received image data only when a code number preset by the intended recipient for that data transmitting station is the same as a code number entered by someone who tries to see that data.

However, with the secure functions of facsimile communication as described above, a memory is of course necessary for storage of the received image data and secure mail can not be received above the capacity of the memory. Furthermore, because there is a possibility of the loss of data due to a power failure or the viewing of the data by an unauthorized third party, the user may feel uneasy about storing image data in the memory.

Due to this situation, a facsimile device has been proposed that immediately converts the received facsimile data to a scrambled image and prints it out on recording paper and then later, restores that image to the original image by rescanning the image and performing a process opposite the process during scrambling (descrambling). However, on this kind of facsimile device, the recording paper on which the scrambled image has been printed becomes waste paper after the scrambled image is restored. Also, even when the receiving side user does not wish to receive encoded data, an encoded image is always printed out as long as the encoding is specified at the transmission side. To such a user, the operations to restore the scrambled data are very troublesome and unpleasant. In addition, 100% complete restoration is sometimes impossible since the posture of the recording sheet at the time of scanning differs from at the time of rescanning, i.e., the scanning line may not coincide perfectly with the rescanning line.

Furthermore, the secure mail function of the conventional facsimile machine is a non-standard function which is possible only when there is agreement between both the transmission side and receiving side and it is essentially only possible between devices of the same maker. Accordingly, a user may not be able to receive secure mail from a facsimile device made by a company different to the maker of the facsimile device that he is using as the receiving device. This would cause various problems since large users such as major corporations must use devices from the same manufacturer to enable the secure mail transmission between them.

With regard to the above problems, it is an object of the present invention to propose a communication terminal device that, when the receiving side user receives an image signal from a third party whose telephone number has been preregistered on the receiving side, converts the image signal to a coded image and prints it out on paper.

It should be noted that, in this case, identification of the third party (calling station) by a transmission terminal identification signal included in a non-standard procedure signal in the pre-message procedures and/or identification of the third party by sender information transmitted to the terminal device of the invention from the exchange during line establishment for telephone communication is possible.

It is a further object of the present invention to propose a communication terminal device to which a plurality of telephone numbers are preassigned and which converts an image signal into a coded image and prints it out when a line is established to a particular telephone number among them.

A first aspect of the present invention provides a communication terminal device capable of encoding a received image signal by a predetermined procedure prior to printing of an encoded signal such that the image signal may be decoded appropriately later, wherein the image signal is encoded and printed on paper when sender information included in the signal received from the sender during communication procedures prior to reception of the image signal has been preregistered on the receiving side.

The communication terminal device according to the first aspect of the present invention encodes and prints an incoming image signal on a recording paper when the sender information transmitted at the time of facsimile communication pre-procedures is the same as the preregistered sender information. Accordingly, encoding is only performed when the user receives a communication from a preregistered third party for which secure mail reception is desired. As reception from other parties is not encoded, there is no wasteful use of recording paper.

The encoded image printed on the recording paper is later decoded so that the user can understand the transmitted image. The scanning line for the decoding operation may not coincide with a line of the printed image on the recording paper. In the present invention, guide lines extending in a sub scanning direction are added to the printed image before the decoding operation. These guide lines are used as indicia for adjusting discrepancy between the printed line of image and the scanning line. The decoding process is performed using these guide lines but the ultimate printing process is performed after deleting these guide lines. Therefore, the image printed after the decoding process does not include the guide lines.

A second aspect of the present invention provides a communication terminal device capable of encoding a received image signal prior to printing of an encoded signal, wherein the image signal is encoded and printed on paper when sender information transmitted from the exchange during transmission and reception of signals to and from the exchange for establishing a line coincides with one of preregistered sender information.

The communication terminal device according to the second aspect of the present invention encodes an image signal received when the sender information transmitted from the exchange at the time of call establishment is the same as the preregistered sender information and an image signal from other parties is not encoded. Accordingly, the encoding is only performed when the user receives a communication from a preregistered third party for which secure mail reception is desired so that there is no wasteful use of recording paper. It should be noted here that in the first aspect of the present invention, it is necessary for the sender information to be included in the signals transmitted and received during the facsimile communication pre-procedures whereas, in this second aspect, there is no such limitation.

A third aspect of the present invention provides a communication terminal device capable of having a plurality of telephone numbers and encoding a received image signal prior to printing of an encoded signal, wherein the image signal is encoded and printed on recording paper when a line is established to a predetermined telephone number among the plurality of telephone numbers.

The communication terminal device according to the third aspect of the present invention encodes and prints a transmitted image signal on a recording sheet when a line is established to a particular telephone number among a plurality of telephone numbers. Accordingly, by simply informing the desired third party of such a telephone number, secure mail communication is performed only when those parties deem it necessary. If a calling station dials a different telephone number, the transmitted image signal is printed without encoding and the secure mailing is not performed.

Figure 1     is a block diagram showing a first embodiment of the communication terminal device of the present invention when teaching of the invention is applied to a facsimile device;

Figure 2     schematically illustrates contents in the secure table of the communication terminal device of the present invention;

Figure 3     is a flow chart showing the operation procedures when performing the confidentiality setting of the communication terminal device of the present invention;

Figure 4     is a flow chart showing general operation procedures when receiving secure mail at the communication terminal device of the present invention;

Figure 5     is a flow chart showing subroutine procedures to print out a transmitted image after scrambling;

Figure 6     is a flow chart showing procedures to obtain an array fac[01234567] from a scramble number "m";

Figure 7A    is a table illustrating an overall process of unit position replacement to provide a scramble table;

Figure 7B    illustrates the arrangements of unit numbers before and after unit position replacement, the after-replacement one being the array for the scramble table;

Figure 8     is a flow chart showing procedures to prepare the scramble table shown in Figure 7B;

Figure 9A    schematically illustrates dots of one line data before reduction;

Figure 9B    schematically illustrates dots of one line data after reduction;

Figure 9C    illustrates a process of data pairing;

Figure 9D    illustrates the descrambling process;

Figure 10    schematically shows a printed line of image with vertical guide lines being added;

Figure 11    is similar to Figure 10, showing the printed line of image with the vertical guide lines in detail;

Figure 12    is a flow chart showing the operation procedures at times of descrambling on the communication terminal device of the present invention;

Figure 13 is block drawing showing second embodiment of the communication terminal device according to the present invention;

Figure 14 is a flow chart showing the operation procedures when receiving secure mail at the communication terminal device shown in Figure 13; and

Figure 15 is a time chart showing the signals transmitted and received between the communication terminal device shown in Figure 14 and the exchange at times of secure mail reception.

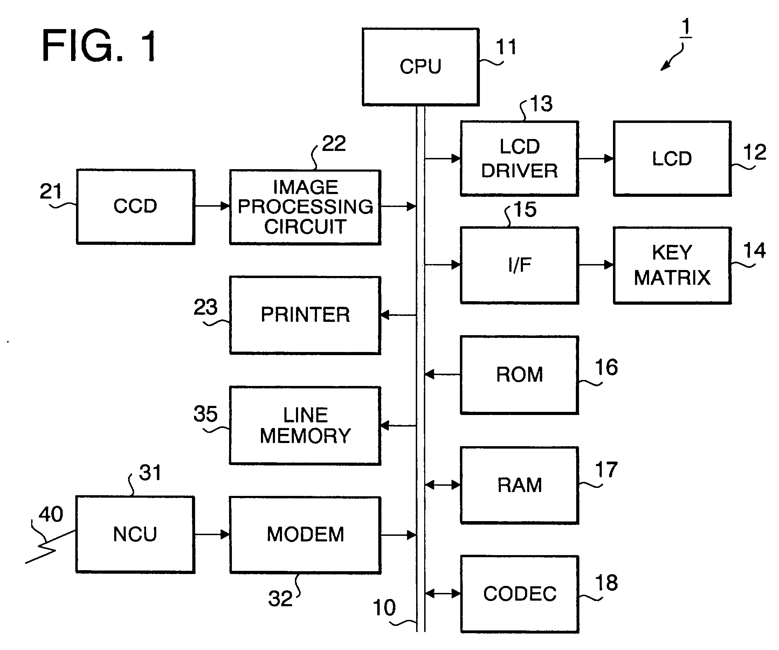

Hereafter, the present invention will be described based on the drawings showing its embodiments. Figure 1 is a block diagram showing a first embodiment of a communication terminal device 1 according to the present invention when the invention is applied to a facsimile device. It should be noted that the communication terminal device 1 of the present invention may also be applied to a variety of communication terminal devices such as a personal computer having facsimile communication functions and a communication device combined with a copy device or the like.

Reference number 11 designates a CPU functioning as a control device and is connected via a bus 10 to digital signal processing elements such as an LCD (Liquid Crystal Display) 12 functioning as a display device and an associated driver 13, a key matrix 14 functioning as an input device and an associated interface (I/F) 15, a ROM 16 that stores various programs for operation procedures of this facsimile device 1, a RAM 17 that functions as a memory means for temporarily memorizing the data relating to a secure mail box and other data which will be described later, and a codec 18 that functions as a bi-level (binary) image video signal compressing/expanding (or coding/decoding) device.

Furthermore, the CPU 11 is also connected via the bus 10 to image reading and printing elements such as a CCD (Charge Coupled Device) 21 as a scanning device for reading the document, an image processing circuit 22 for converting the analog signal read by the CCD 21 to a digital image signal by conversion to binary and a printer 23 that prints the digital image signal on paper. The CPU 11 is further connected via the bus 10 to elements for performing communication functions such as a network control unit (NCU) 31 that connects the device to a communication network 40 and a modem 32 therefor.

It should be noted that the facsimile device 1 shown in Figure 1 is not provided with a memory for storage of the image data to be transmitted or the received image data, and normally the received image data is immediately printed out from the printer 23 after being expanded (or decoded) by the codec 18. However, a line memory 35 comprising a number of lines necessary for generation of a coded (scrambled) image which will be described later is provided in the facsimile device 1 shown here. The line memory 35 is smaller than a memory required in a conventional communication terminal device for storage of image signal.

The operations of the facsimile device 1 of the present invention shown in Figure 1 as a communication terminal device are controlled by the CPU 11 in accordance with the programs stored in the ROM 16 and its general operations are described below. It should first be noted that facsimile communication is defined by the International Telecommunication Union (ITU-T) into 5 stepwise phases: phase A (call establishment) for connection of the communication line between two devices, phase B (pre-message procedure) for the exchange of various specifications and constraints prior to transmission of a message (data of a document to be transmitted or received), phase C (message transmission) for exchange of the message, phase D (post-message procedure) for completion of the message transmission and confirmation of that, and phase E (call release) for disconnecting the communication line between the two devices.

When normal facsimile communication is performed, in short, in the case where the communication terminal device 1 of the invention is a calling station, the user sets the communication terminal device 1 into a transmission mode and dials the telephone number of a third party by operating the key matrix 14. In response to this, the CPU 11 performs the phase A line establishment. In short, the CPU 11 allows connection to the communication network 40 by instructing the NCU 31 and carries out a call. When the line to a remote facsimile device of the third party is established upon the phase A procedure, the CPU 11 performs the phase B pre-message procedure for identification and selection of the functions requested by both devices.

During this time, the user causes the CCD 21 to scan the document to be transmitted. The analog signal scanned from the document by the CCD 21 is then converted to a digital image signal by a binary conversion in the image signal processing circuit 22 and compressed by the codec 18 in accordance with a so-called run-length coding method. The CPU 11 then performs message transmission of phase C to the remote facsimile device of the communication party, in short transmission of the compressed digital image signal (message) obtained from the document to be transmitted to the communication party is performed via the modem 32 and NCU 31 while adjusting the phase and synchronicity of the signal.

When the transmission of the whole message has finished, the CPU 11 performs the phase D post-message procedures, in short the completion and confirmation of the message transmission. Once this confirmation has been obtained, the CPU 11 disconnects the lines via an instruction to the NCU 31 and performs the call release of phase E.

This concludes the description of the basic operations when the facsimile device 1 of the invention works as a calling side communication terminal device. Hereafter, the basic operations of the facsimile communication device of the invention when used as a called station will be described.

At the called station, when the NCU 31 is connected to the communication network 40 due to the call establishment from the remote facsimile device (calling station), the CPU 11 enters the phase B whereby communication with the calling station is made possible upon execution of the pre-message procedures. Thereafter, the CPU 11 receives via the NCU 31 and modem 32 the compressed or coded digital video signal of the document to be received according to the phase C message transmission. This coded digital video signal is immediately sent to the codec 18 from the modem 32 and sequentially expanded or decoded to the original digital image signal line by line before it is stored in the line memory 35. After temporary storage in the line memory 35, the decoded signal is then either printed out on paper by the printer 23 or delivered to the LCD driver 13 and displayed in the LCD 12.

When reception of all the signals obtained from the document is complete, the CPU 11 send and receives various signals to and from the remote facsimile device in the phase D post-message procedures. Once completion of the post message procedures has been confirmed, the CPU 11 completes communication by performing the phase E call release.

Next, the operations when the facsimile device (the communication terminal device) 1 of the present invention shown in Figure 1 receives secure mail will be described. In contrast to conventional facsimile communication where secure mail reception is possible only after permission to use secure mail functions has been agreed between the transmission side and receiving side, acceptance or refusal of the secure mail can arbitrarily be determined at the receiving side communication terminal device 1 in the present invention.

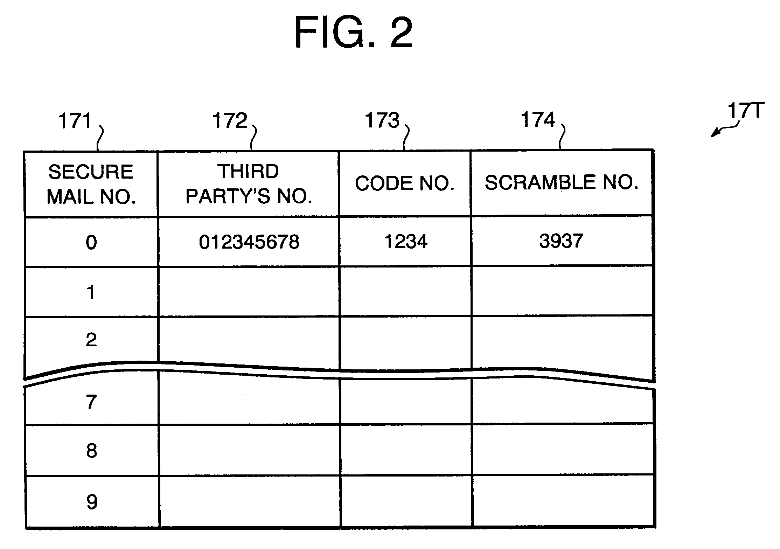

Figure 2 is a schematic diagram showing the contents of the secure mail table 17T made in a predetermined area of the RAM 17. When there is a call from a remote facsimile device of which telephone number (facsimile number) is recorded in this secure mail table 17T beforehand, the secure mail is carried out. In reality, the received data is printed out after being converted (encoded) to scrambled image data.

When facsimile reception using secure mail functions is performed on the facsimile device 1 on the receiving side (the communication terminal device of the present invention), it is necessary on the receiving side to record beforehand telephone numbers of remote facsimile devices from which the data is received as secure mail and code numbers for scrambling and descrambling corresponding to them. Furthermore, it is necessary for the communication terminal device 1 of the invention to create and memorize the data necessary for scrambling and descrambling (scrambling number) from the code number. Due to this, a secure mail number area 171, a third party number area 172, a code number area 173 and a scramble number area 174 are arranged in the secure mail table 17T as shown in Figure 2.

In the illustrated embodiment, the secure mail number column 171 includes ten areas corresponding to the secure mail numbers from "0" to "9". Corresponding to each of these secure mail numbers "0" to "9", telephone numbers of third parties (facsimile numbers of transmission side facsimile devices) are registered in the third party number column 172, code numbers are registered in the code number column 173 and scramble numbers created from the code numbers by a method described later are stored in the scramble number column 174.

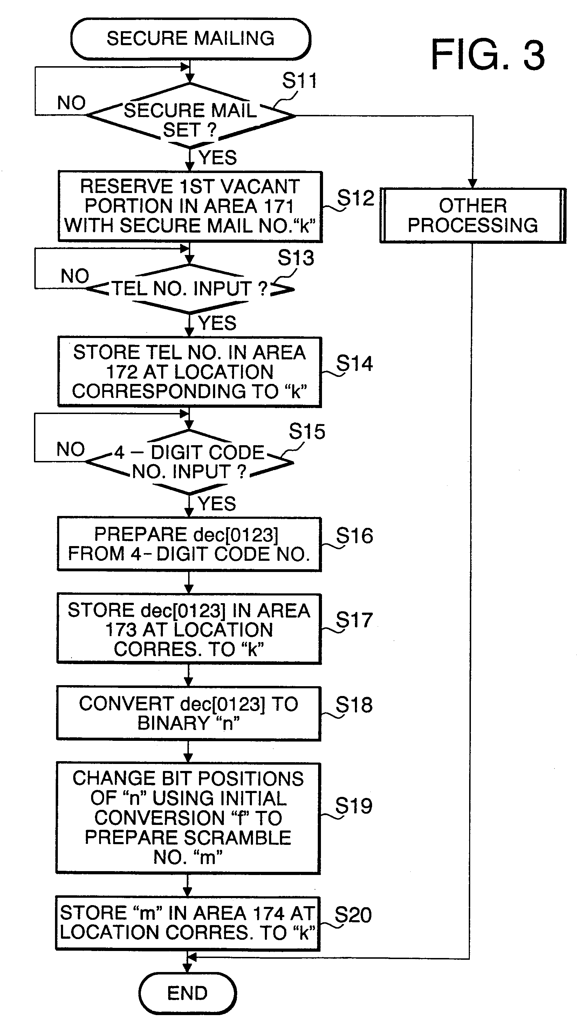

Next, the operations for the secure mail setting of the communication terminal device 1 of the present invention will be described with reference to the flow chart shown in Figure 3. It should be noted that in the following description, it is presumed that the telephone number of the calling station is transmitted to the called station by "FIF" (Facsimile Information Field) sent in continuance with the "TSI" (Transmitting Subscriber Identification) signal transmitted to the called station from the calling station during the pre-message procedures.

When the user desires data reception from a remote facsimile device of a certain telephone number in the form of secure mail, secure mail setting is entered into the facsimile device 1 of the present invention by a predetermined key operation and thereafter, the vacant area (for example, "0" area) is specified by the CPU 11 and the telephone number (for example, 012-34-5678) of the third party and the code number (for example, 1234) that is set freely by the user are respectively entered by operating the key matrix 14. It should be noted that in this embodiment, the code number is given as 4 figures but it is not limited to 4 figures. As illustrated in the table 17T of Figure 2, the telephone number "012-34-5678" and the code number "1234" are stored in the row of the secure mail number "0".

Referring to the flowchart of Figure 3, when the CPU 11 recognizes that there is secure mail setting by the detection of the operation of the key matrix 14 (step S11), it reserves the leading vacant area (the row of secure mail number "k") in the secure mail number area 171 (step S12), Then, when the user enters a telephone number (step S13), CPU 11 enters the telephone number in the third party number area 172 corresponding to the secure mail number "k" (step S14). When the user enters the code number (step S15), the 4 figures are entered and stored in the code number area 173 corresponding to the secure mail number "k" as array "dec[0123]" (steps S16 and S17).

The scramble number m is created as follows. The array "dec[0123]" of the code number input at step S16 is converted to a binary "n" (step S18) and a scramble number "m" is created (step S19) by exchanging the bit positions using initial conversion "f". The resulting scramble number "m" is stored in the scramble number area 174 corresponding to the secure mail number "k" (step S20).

Thus for example, the telephone number "012-34-5678" is stored in the third party number area 172 corresponding to the secure mail number "0" of the secure mail number area 171, the code number "1234" is stored in the code number area 173 and the scramble number "m" is stored in the scramble number area 174 as shown in Figure 2.

It should be noted that, when the user desires secure mail reception from a plurality of third parties, the plurality of third party numbers and the code numbers corresponding to those may be recorded by an operation similar to that described above.

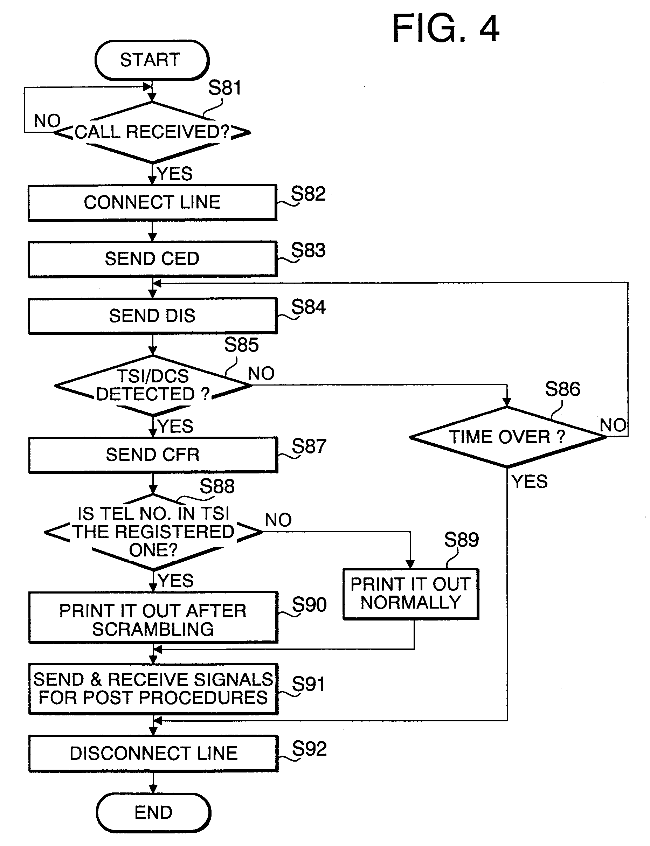

The operation procedures of when reception of a facsimile signal by the communication terminal device 1 of the present invention will be described with reference to the flow charts of Figures 4, 5 and 6.

On the facsimile device 1 of the present invention, the CPU 11 always detects the presence or absence of a call tone (step S81). When there is a call, the CPU 11 first performs the phase A line connection (step S82) and then the phase B pre-message procedures. In real terms, the CPU 11 transmits a "CED" to the calling station (remote facsimile machine) (step S83). "CED" is a signal indicating that the called station is a non-speech terminal.

Next, the CPU transmits a "DIS" signal expressing its (the called station) standard CCITT abilities and then waits for "TSI" and "DCS" signals to be transmitted from the calling station (step S84 and S85). The "TSI" signal is a transmission terminal identification signal indicating that the contents of the subsequent facsimile information field ("FIF") is information identifying the calling station (telephone number). Further, the "DCS" signal is a digital command signal responding to the standard facilities identified by the aforementioned DIS signal.

When no "TSI" and "DCS" signals are transmitted from the remote facsimile device within a predetermined time period in response to the "DIS" signal transmitted to the calling station (No at step S86), the CPU 11 terminates the procedures by disconnecting the lines (step S92). When "TSI" and "DCS" signals are transmitted within a predetermined time period, the CPU 11 transmits a "CFR" signal to the calling station (step S87). This "CFR" signal is a confirmation signal indicative of completion of reception preparation and is a digital response that confirms to the calling station that all the pre-message procedures have been completed and that message transmission may begin.

The above procedures thus complete all pre-message procedures. The CPU 11 then determines whether or not the telephone number included in the "FIF" in the received "TSI" is one of the registered telephone numbers in the secure mail table 17T (step S88) and thereafter performs the phase C message transmission. If the received telephone number does not coincide with any one of the telephone numbers registered in the secure mail table 17T, normal facsimile reception is performed as phase C message transmission (step S89). In short, the CPU 11 immediately expands the received data signal at the codec 18 and prints it out from the printer 23 (step S89).

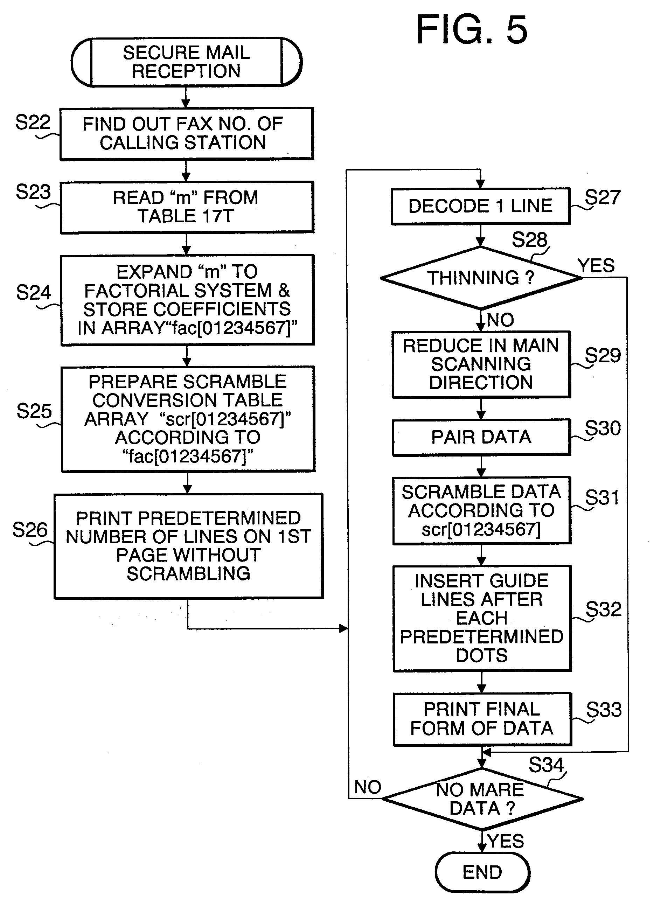

Conversely, at step S88, if the received telephone number coincides with one of the registered ones in the secure mail table 17T, the CPU 11 scrambles the received data and prints it out from the printer 23 (step S90). (The processing at this step S90 is shown in the flow chart of Figure 5 as a sub-routine and will be described in more detail hereafter.) Thereafter, the CPU 11 performs the transmission and reception of signals for the phase D later procedures (post message procedures) (step S91) and then the phase E disconnection of the lines (step S92).

Next, the details of the aforementioned processing at step S90 will be described with reference to the sub-routine flow charts of Figure 5. Firstly, the CPU 11 reads the telephone number of the remote facsimile device (calling station) from the received "FIF" (step S22) and in accordance with that, reads out a scramble number "m" from the scramble number area 174 in the secure mail table 17T using the secure mail number in the secure mail number area 171 (step S23).

Next, the CPU 11 expands the scramble number "m" into a factorial system (will be described later) and coefficients obtained as a result of this expansion is stored in array "fac[01234567]" (step S24). Next, the CPU 11 produces a conversion table for scrambling as array "scr[01234567]" in accordance with the array "fac[01234567]" (step S25).

Here the factorial system will be described. The factorial system is as below when shown in equation form. The example below shows when 4 figures are expanded into the factorial system.

$$m = f_7 \times 7! + f_6 \times 6! + f_5 \times 5! + f_4 \times 4! + f_3 \times 3! + f_2 \times 2! + f_1 \times 1!$$

As an example, when m=3937,

$$3937 = 0 \times 7! + 5 \times 6! + 2 \times 5! + 4 \times 4! + 0 \times 3! + 0 \times 2! + 1 \times 1!.$$

Accordingly, the coefficients become $f_7=0$, $f_6=5$, $f_5=2$, $f_4=4$, $f_3=0$, $f_2=0$ and $f_1=1$ respectively. These coefficients are memorized as array "fac[01234567]".

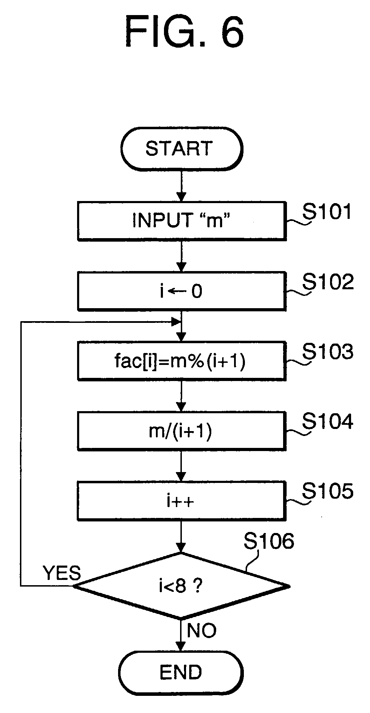

Figure 6 is a flow chart used when the CPU 11 determines the array "fac[01234567]" from the scramble number "m". Firstly, the CPU 11 enters the scramble number "m" from the secure mail table 17T (step S101), initializes the variable "i" to "0" (step S102) and uses the remainder acquired upon dividing m by i+1 as the i'th element of the array "fac[01234567]" (step S103). At the start, fac[0] is determined. Next, the CPU 11 uses the quotient obtained by dividing "m" by i+1 as "m" (step S104) and increments "i" by "1" (step S105). The program returns to step S103 until "i" reaches 8 (step S106).

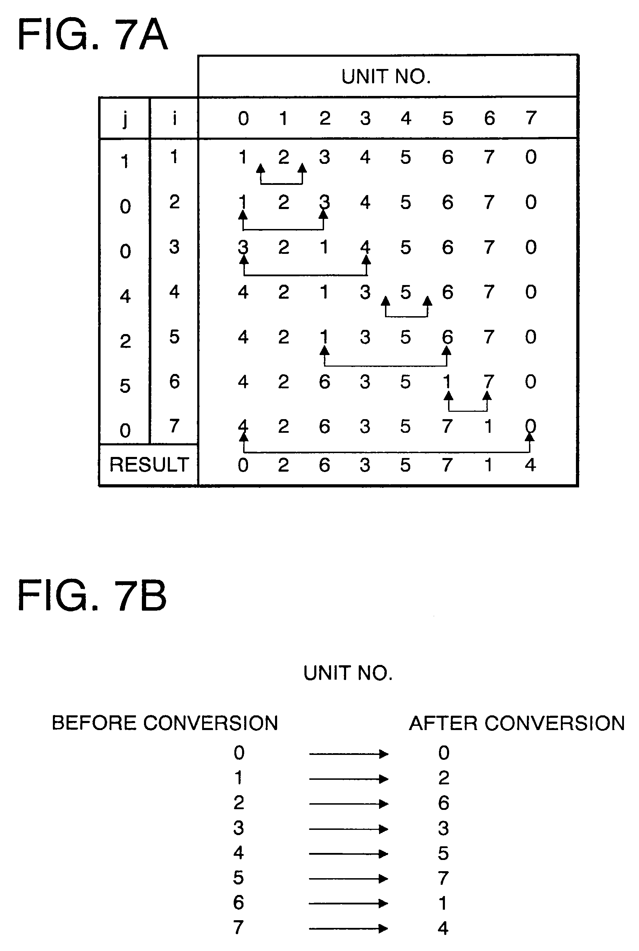

Due to the above steps from S103 to S105 being loop processed, an expansion of the factorial system is performed on the 4 figures "m" and the array "fac[01234567]" is consequently obtained. Furthermore, the conversion table for scrambling is determined from this array "fac[01234567]" as array "scr[01234567]". These procedures will be described with reference to the diagram of Figure 7A.

The units (0-7) shown in Figure 7A are obtained by dividing one line of the received image by a predetermined dot count (8 dots in the present embodiment) and scrambling is performed by exchanging the positions of these units. In the communication terminal device 1 of the present invention, scrambling is uniquely possible for each of a plurality of code numbers since the factorial system is used.

After the scramble number m is determined from the input code number and the array "fac[01234567]" is determined in accordance with the scramble number "m" as described above, an arbitrary initial array to replace the positions of the units 0 through 7 is uniquely assigned (the numbers "1, 2, 3, 4, 5, 6, 7, 0" are assigned to the units 0 through 7 in the initial array as shown in Figure 7A: first row of Figure 7A). Using this array as a starting array, the elements "j" (the order is 1, 0, 0, 4, 2, 5, 0 when "m" = 3937) of array "fac[01234567]" and the elements "i" (the order is 1, 2, 3, 4, 5, 6, 7, 0) of the initial array are sequentially picked up to replace the locations of the elements "i" in the following manner.

For example, at the start, as "i"=1 and "j"=1 (see the columns "i" and "j" in the table shown in Figure 7A), the "2" at the position of unit number 1 and the "2" at the position of unit number 1 are exchanged (in actuality, no exchange occurs) and "1, 2, 3, 4, 5, 6, 7, 0" becomes "1, 2, 3, 4, 5, 6, 7, 0" (second row in Figure 7A). Next, as "i"=2 and "j"=0, the "3" at the position of unit number 2 and the "1" at the position of unit number 0 are exchanged and "1, 2, 3, 4, 5, 6, 7, 0" becomes "3, 2, 1, 4, 5, 6, 7, 0" (third row in Figure 7A). Similar position exchange is repeated in accordance with "i" and "j", and it ultimately results in "0, 2, 6, 3, 5, 7, 1, 4" (bottom row in Table of Figure 7A or Figure 7B).

Another table (scramble table) comparing this result with the original pre-exchange unit numbers "0, 1, 2, 3, 4, 5, 6, 7" (i.e., the table indicating the relation shown in Figure 7B) is memorized as array "scr[01234567]", and scrambling is performed unit by unit using the array scr[01234567] as will be described later.

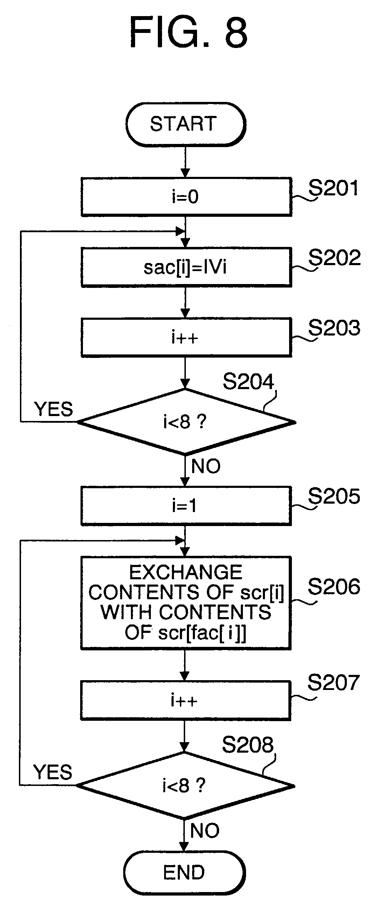

Figure 8 is a flow chart for creating the scramble table by the CPU 11. After CPU 11 has formatted variable i to "0" (initialisation: step S201), each element of the aforementioned initial array IVi is assigned to each element of the array "scr[i]" by the variable "i" being sequentially incremented to 7 (steps S202, S203 and S204).

Next, the CPU 11 initializes the variable "i" to "1" (step S205) and executes one exchange operation as shown in Figure 7A (change from the first row to the second row) by exchanging the contents of the array "scr[i]" with the contents of the array "scr[fac[i]]" (step S206). After that, the variable "i" increments by "1" (step S207). The scramble table as shown in Figure 7B is created by the CPU 11 repeatedly executing the processes of steps S206 and S207 with respect to each natural number of the variable "i" from 1 to 7 (step S208).

As understood from the foregoing, the CPU 11 expands (decodes) the received data by the codec 18 and prints out that data by the printer 23 after or while scrambling in the above-mentioned manner. It should be noted, however, that the first predetermined number of lines of the received data are expanded by the codec 18 and printed immediately. In other words, the first some lines are printed out by the printer 23 without being scrambled (step S26). As previously mentioned, this non-scrambled printing is performed in order to explicitly show the destination of the facsimile communication, the transmission source or the like. The predetermined number of lines are printed on a recording paper without being reduced. Details relating to reduction will be described later.

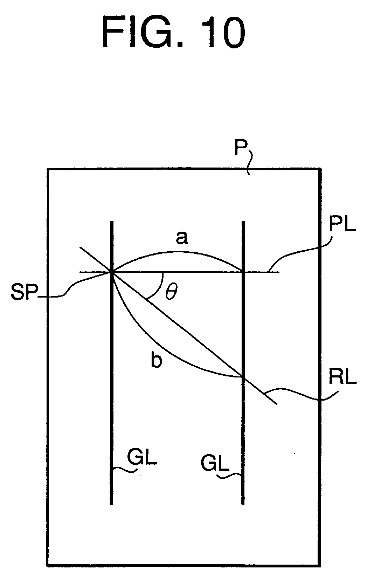

After the predetermined number of lines have been output unchanged from the printer 23, one line of data is expanded by the codec 18 (step S27: Figure 5). Next, determination of whether to perform line removal (thinning) for data size reduction in the sub-scanning direction is made (step S28). When line removal should be performed, the processing advances to step S34. When the thinning is unnecessary, the processing advances to step S29. At step S29, one line of data is reduced in the main scanning direction. The resulting data is paired (step S30) and scrambled (step S31) in accordance with the array "scr[01234567]" created at step S25. Vertical guide lines (GL in Figure 10) are added to the scrambled line at each standard dots (step S32). The obtained data is then printed out by the printer 23 (step S33). It should be noted that this one line of data is processed while being maintained in the line memory 35.

Due to the processing of the above steps S27, S28, S29, S30, S31, S32 and S33 being repeated until no data remains (step S34), all the received data is printed out by the printer 23 in a scrambled state except for the predetermined leading lines.

Hereafter, the pairing performed at step S30, the scrambling performed at step S31 and the guide line addition performed at step S32 will be described respectively.

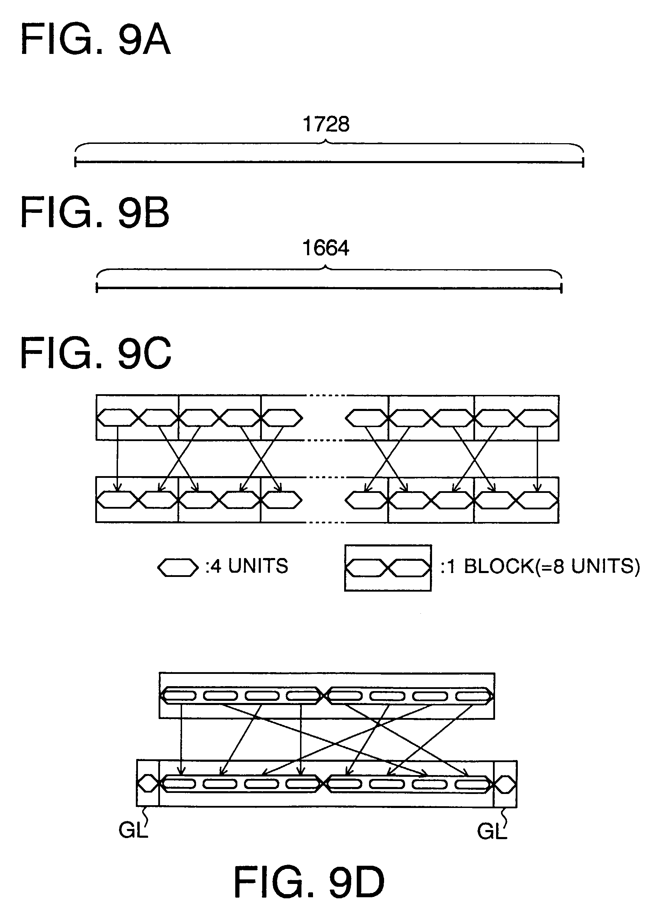

Firstly, the pairing performed at step S30 will be described with reference to the schematic diagrams illustrated in Figures 9A to 9D. As shown in Figure 9A, one line of data basically consists of 1728 dots when A4 size paper is placed lengthwise. The CPU 11 reduces these 1728 dots to, for example, 1664 dots as shown in Figure 9B. The CPU 11 then divides these 1664 dots into a plurality of units (each unit consists of 8 dots). Four units makes one flattened hexagon in Figure 9C. The CPU 11 then exchanges the positions of all the hexagons for X shapes except the two at ends as shown in Figure 9C. Two hexagons make one block in the illustrated embodiment.

After the pairing process, the scrambling process is performed in accordance with the scramble table of Figure 7B on each block (each block consists of 8 units, i.e., 64 dots) of one line of data (Figure 9D). Figure 9D depicts one block that includes eight units whose positions are changed as indicated by the arrows. As this unit scrambling is performed in accordance with the array "scr[01234567]" created from the particular code number as described above, it is unique to each of a plurality of code numbers.

Next, the guide line (GL) addition is performed. In order to improve the accuracy when descrambling is performed, the guide lines GL are spacedly added in the sub-scanning direction of the facsimile signal, in short, at predetermined intervals in a direction at right angle to each line. The reason for this is as described below.

As shown in the schematic diagram of Figure 10, it should be assumed here that one line has been printed out on the paper P as printing line PL in accordance with the received facsimile signal. This printing line PL extends through a point SP near the upper left corner of the paper P in the illustrated embodiment. If the descrambling is performed by scanning toward the right along the oblique reading line RL angled by the angle $\theta$ from the point SP, the length "b" of the reading line RL with respect to the length "a" of the printing line PL is given by $b=a/\cos\theta$, and this length "b" is longer than the original length "a".

When the reading line RL is angled with respect to the printing line PL in this way, the aforementioned units are gradually skewed as the document image is scanned in the extended state and the largest skewing occurs at the right edge of the paper P. The skewing results in noises in descrambling and appears as vertical lines on the paper P.

The influence of the slanting of the reading line RL with respect to the horizontal printing line PL on the descrambling process is, to some extent, an unavoidable problem. Such a problem is not only limited to facsimile devices: it also occurs in other devices as long as they optically scan a document. When transmission and reception of a document is performed by a normal facsimile device, it simply results in slanting printing on a hard copy paper at the slightest degree and practically presents no problems. However, on the facsimile device 1 of the present invention, as scrambling is performed by exchanging the positions of the units (each unit consists of 8 dots), if there is not precise coincidence for each 8 dots between the lines RL and PL, the original document can not be restored from the scrambled image by the descrambling process.

Thus, on the facsimile device (the communication terminal device) 1 of the present invention, when each post-scrambled line is printed out, vertical lines (black dots) GL are added at predetermined dot intervals. By confirming alignment between the lines RL and PL at the positions of the black dot vertical lines and removing the black dot vertical lines from the data scanned for descrambling, the influence of inclination of the scanning line RL is kept to a minimum.

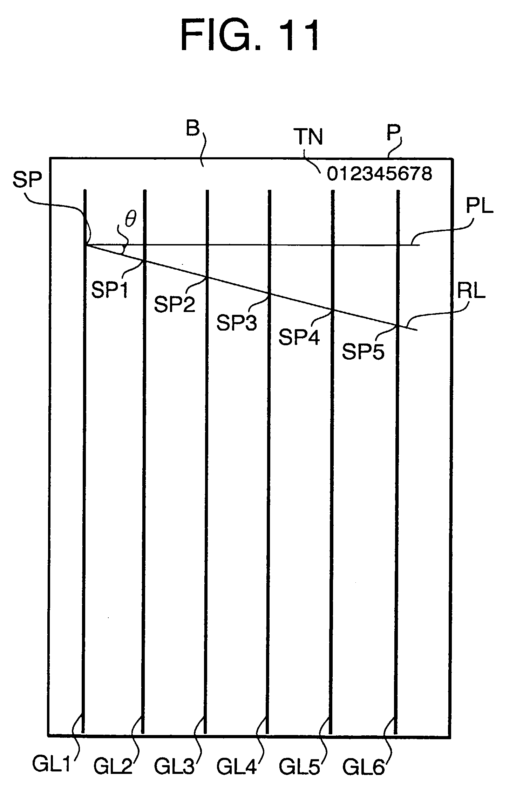

Figure 11 is a schematic diagram showing an example of the scrambled image (line) PL printed out on a paper P with the vertical guide lines GL1 to GL6 being added. The reading line RL is aligned to the start point SP at the upper left edge of the paper P and slants by the angle $\theta$ with respect to the printing line PL so that a difference between the printing line PL and reading line RL is generated between each two guide lines, for example between the guide lines GL1 and GL2. However, as a temporary resetting is performed upon detection of a cross over point SP1 between the guide line GL2 and reading line RL, it is possible to scan once again from a correct position between the next two guide lines GL2 and GL3. The spacing between each two adjacent guide lines is 8 dots which is equal to the width of one unit. Therefore, each unit is accurately processed in this invention.

Accordingly, due to the printing out of the scrambled image while adding a plurality of vertical guide lines GL1, GL2 etc. for each horizontal line of image, as a repositioning is performed at each cross over point SP1, SP2 etc. between each of those guide lines GL1, GL2... and the reading line RL, the influence of the slanting of the scanning line with respect to the printing line PL may be reduced to a minimum when compared to the non-addition of the guide lines.

In order to add the guide lines in the above described manner, the scrambled image is reduced beforehand in the main scanning direction. It should be noted that essentially the image need only be reduced in the main scanning direction but as the ratio between the vertical and horizontal changes when reducing only in the main scanning direction, the facsimile device 1 of the present embodiment also reduces the image in the sub-scanning direction. It should also be noted that the guide lines GL may be added without reducing the scrambled image. In this case, dots at the end(s) of the line may be discarded.

When reducing the scrambled image in the sub-scanning direction, a blank space B is produced in an upper area on the paper P so that the telephone number TN obtained from the TSI may be converted to numerals 012345678 and recorded in this marginal space B. In that case, the processing of S26 of Figure 5 may be omitted. In short, the scrambling and guide line addition may also be performed to the first predetermined lines.

As understood from the foregoing, the incoming image undergoes the pairing process, the scrambling process and the guide line addition process before it is printed on a recording sheet by the communication terminal device 1 of the invention. Specifically, the groups of 4 units in each line of the received image (each unit consists of 8 dots) are rearranged based on a predetermined rule in the pairing process, the units in each block (each block consists of 8 units) are rearranged based on the code number (scrambling process) and the black dots of guide line are added at each predetermined dot intervals for each line (guide line addition process). Therefore, the printed image is not understood by an ordinary person or cannot be easily deciphered. In addition, the received image is shortly printed out, i.e., it is not stored in a certain memory until a user instructs the printing. Accordingly, compared to general secure mail functions which store the data in a memory, there are no problems such as the loss of data due to power failures or the viewing by an unauthorized third party. However, it is necessary to restore the processed data (printed image) to a readable state at the side which has received it.

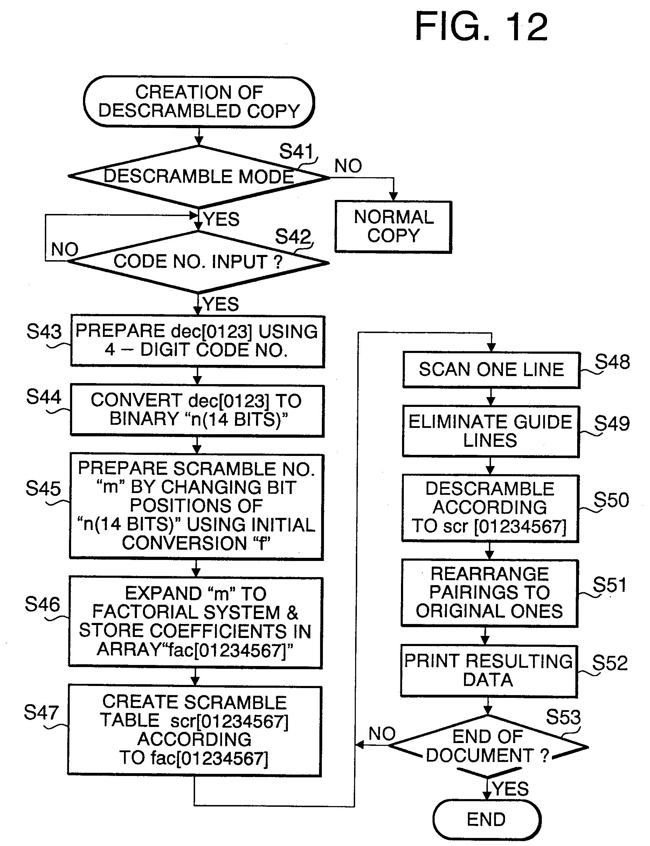

Next, the operations for restoring the printed image to the original image, in short, the descrambling operations of the facsimile device 1 of the present invention will be described with reference to the flow chart of Figure 12.

When this descramble process is performed, the user scans the document (the hard copy obtained by printing out the data received in the secure mail mode) using the CCD 21 after specifying a descramble mode by operating the key matrix 14. The CPU 11 first determines whether the facsimile device 1 of the invention is in a descramble mode or not (step S41). When a descramble mode has been specified, the CPU 11 waits until the 4 figure code number is entered (step S42). At this point, when the user enters by operating the key matrix 14 the same 4 figure code number as already registered by himself, the CPU 11 creates a scramble number m (steps S43, S44 and S45) by the procedures similar to when secure mail setting is performed (steps S15, S16, S18 and S19).

It should be noted in the series of process shown in Figure 12 that the step S14 in Figure 3 (the process for storing the code number in the code number area 173 of the secure mail table 17T) is not performed. Furthermore, no comparison between the code number already stored in the code number area 173 of the secure mail table 17T and the code number entered this time is performed. Accordingly, the processing so far in the descramble mode in Figure 12 is executed even if the code number registered at the time of secure mail setting and already stored in the code number area 173 of the secure mail table 17T and the code number entered just now by an operator during the descrambling process are not the same.

Next, similar to secure mail reception, the CPU 11 expands the scramble number m into the aforementioned factorial system and memorizes the resulting coefficients as an array "fac[01234567]" (step S46). Next, the CPU 11 creates an exchanging table for scrambling in accordance with the array "fac[01234567]" as an array "scr[01234567]" (step S47).

Thereafter, the CPU 11 descrambles the data read by the CCD 21. Specifically, the CPU 11 first causes the CCD 21 to scan 1 line (step S48). The black dots of guide line GL are included in the scanned data. The CPU 11 acquires one line of "net data" (data without the black dots) by removing these black dots (step S49). The line of data obtained in this way is split into 8 dot units by the CPU 11, the array of the units is descrambled and returned to its original state (step S50) in accordance with the array "scr[01234567]" determined at step S47, and the pairing of the units is returned to the original state (step S51). Then, the CPU 11 outputs the final form of data to the printer 23 so that the printer 23 prints it out (step S52).

The above-mentioned processes of steps S48, S49, S50, S51 and S52 are repeated until the data scanned by the CCD 21 from one page of document (scrambled document) is no more (step S53). When the code number registered at the time of secure mail setting and already stored in the code number area 173 of the secure mail table 17T and the code number entered for the descramble mode are the same, the one page of document scrambled at time of reception and printed out is now printed out from the printer 23 after being restored to essentially the state of before scrambling or before transmission (to the state of original document).

However, when the code number registered at the time of secure mail setting and already stored in the code number area 173 of the secure mail table 17T and the code number entered for the descramble mode are not the same, the image printed out as a result of descrambling is an image differing from the pre-transmission state (i.e., differing from the original document). In other words, if the correct code number is not entered during the descrambling mode, the pre-transmission original image can not be reproduced. While this point is simple, it demonstrates the secure mail functions of the communication terminal device 1 of the present invention.

It should be noted that the first predetermined number of lines are printed out from the printer 23 after being expanded by the codec 18 without being scrambled at times of secure mail reception (step S26). Accordingly, the first predetermined number of lines may also be printed out from the printer 23 without being descrambled when processing in the descramble mode is to be performed. However, as destination etc. is already known when secure mail is received, there is no problem if that part is also descrambled to unreadable characters and symbols.

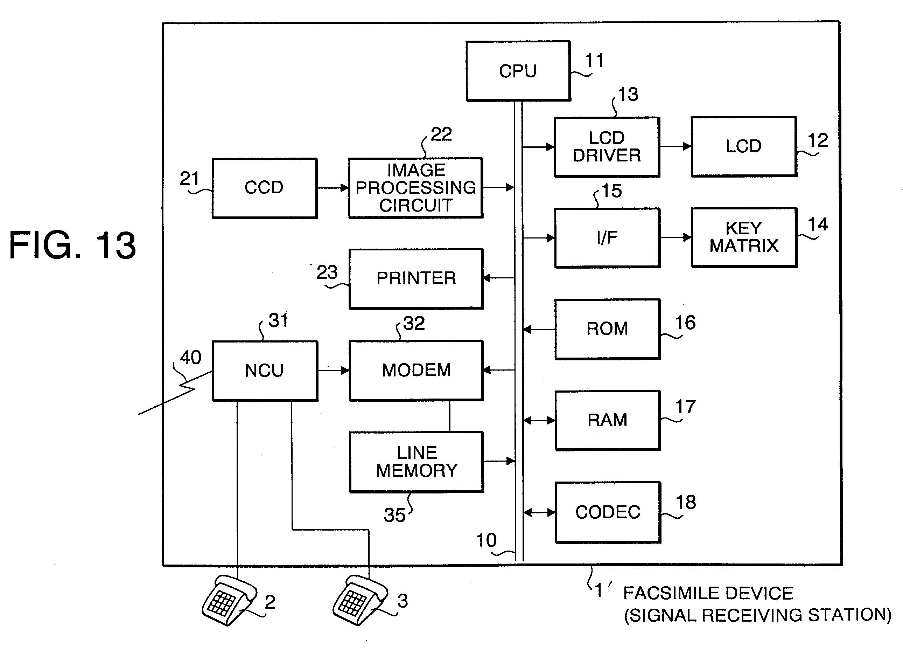

Next, a second embodiment of when the communication terminal device 1' of the present invention is applied to a different type of facsimile device will be described with reference to the block diagram of Figure 13 showing that structure. Like reference numerals are give to like elements in Figures 1 and 13 and description of such elements is omitted in the following description.

The second embodiment shown in Figure 13 differs from the first embodiment as shown in Figure 1 in that not only the facsimile device 1' (the communication terminal device of the present invention) but also two telephone sets 2 and 3 are connected to the NCU 31 and four telephone numbers are assigned (for example, a distinctive ring detector service or direct inward dialing system or the like). Of these four telephone numbers, two are assigned to the telephone sets 2 and 3 respectively and the remaining two are assigned to the facsimile device 1' of which one is memorized in the RAM 17 as a number for secure mailing (first telephone number) and the other is a number for normal facsimile data reception (second telephone number). Accordingly, the user may inform the first telephone number beforehand to a third party when secure mail reception is desired.

In the first embodiment, a transmitting terminal identification signal "TSI" that is transmitted from the calling station to the called station when phase B pre-message procedures are performed is used by the called station to identify the calling station. In this second embodiment, however, a so-called "caller ID service" is used. It should be noted that the methods of coding and decoding (scrambling and descrambling) are the same as the first embodiment and therefore will not be described.

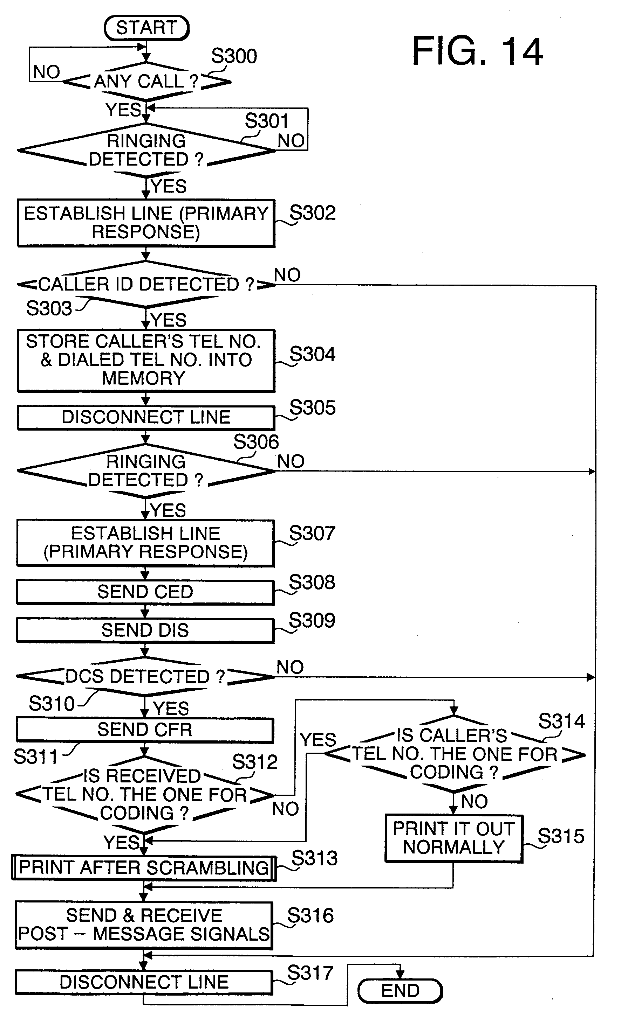

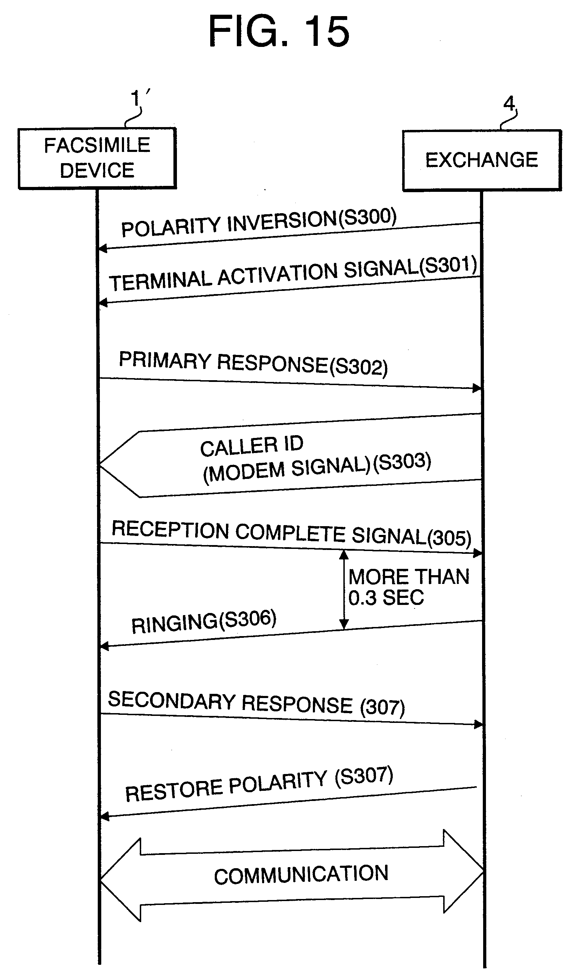

Hereafter, the operational procedures of the second embodiment facsimile device (the communication terminal device of the present invention) 1' will be described with reference to the flow chart as shown in Figure 14 and the time chart showing the transmission and reception of signals between the exchange 4 and the facsimile device 1' as shown in Figure 15.

On the communication terminal device 1' of the present invention, the CPU 11 continually detects whether there is a call signal or not (step S300) and if there is, the polarity of the lines between the facsimile device 1' and the exchange 4 is reversed and a terminal activation signal (ringing signal) is sent from the exchange to the facsimile device 1' so that the CPU 11 detects whether there is a ringing from the exchange (step S301). If a ringing is detected, the CPU 11 establishes a line and performs a primary response to the exchange 4 (step S302). In response to this, the exchange 4 sends caller ID (Caller Telephone Number Information) to the facsimile device 1' in the form of modem signal. When this caller ID is detected by the facsimile device 1' (step S303), the CPU 11 temporarily memorizes that caller ID and the called telephone number in the RAM 17 respectively (step S304). It should be noted that when the caller ID is not detected, the CPU 11 disconnects the lines and processing is finished (step S317).

Next, the CPU 11 disconnects the lines after sending a reception complete signal to the exchange 4 (step S305) and waits for a ringing signal from the exchange 4 (step S306). When no ringing signal is sent, processing advances to the step S317 and then processing is concluded. If a ringing signal is sent, the CPU 11 again performs line establishment by sending a secondary response signal to the exchange 4 (step S307).

All subsequent processes are fundamentally the same as the first embodiment. The transmission of "CED" and "DIS" to the exchange 4 is performed (steps S308 and S309) and the CPU 11 then waits for a "DCS" from the exchange 4 in response to this (step S310). When a "DCS" is received from the exchange 4, the CPU 11 concludes the pre-message procedures by sending a "CFR" to the exchange 4 (step S311).

Then the CPU 11 determines whether the received telephone number is the number stored in the RAM 17, in short, is the first telephone number for which coding has been specified (step S312) and if this is the case, the received facsimile signal is printed out by the printer 23 after encoding (step S313). Conversely, if the received telephone number is not one which has been stored in the RAM 17 or it is the second telephone number (No at step S313), the CPU 11 now determines whether the caller ID memorized in the RAM 17 is registered in the secure mail table 17T (step S314). If registered, the CPU 11 prints out the received facsimile signal by the printer 23 after encoding (step S313). If not registered, the received facsimile signal is printed out by the printer 23 without being encoded, in short, as a normal facsimile reception is conducted (step S315).

Thereafter, the CPU 11 performs the transmission and reception of signals for post-procedures (post-message) (step S316) and subsequently ends the processing by disconnecting the lines (step S317).

In the above-mentioned embodiment, if either of the caller ID or called telephone number is the one for coding, the received facsimile signal is printed out by the printer 23 after encoding. However, printing out by encoding may be performed only when both are the ones for coding.

Furthermore, in the above-mentioned embodiment, the communication terminal device of the present invention is applied to a facsimile device, but obviously application of the present invention to a variety of communication terminal devices having facsimile communication functions such as a personal computer or the like and not just facsimile devices is possible.

Yet further, in the above-mentioned embodiment, G3 and G4 have been given as examples of facsimile communication but application of the invention is not limited to these and other methods of facsimile communication are possible.

Yet further still, a variety of other encoding techniques may be used and not just the encoding method described above.

## Claims

1. A communication terminal device (1) of a type receiving an image signal from a remote communication terminal, the remote communication terminal adapted to send information about the remote communication terminal during communication procedures with the communication terminal device (1) prior to reception of the image signal by the communication terminal device (1), characterized in that the communication

   terminal device (1) comprises: encoding means (18) for encoding at least part of the image signal sent from the remote communication terminal;

printing means (23) for printing the encoded image signal on a recording sheet (P); and

preregistration means (17) for storing at least one information, the encoding means (18) encoding the image signal prior to printing of the encoded image signal when the information about the remote communication terminal sent from the remote communication terminal coincides with the at least one information stored in the preregistration means (17).

2. A communication terminal device (1) of a type receiving an image signal from a remote communication terminal via an exchange, the exchange (4) adapted to send information about the remote communication terminal during procedures with the communication terminal device (1) for line establishment between the communication terminal and remote communication terminal, characterized in that the communication terminal device (1) comprises:

encoding means (18) for encoding at least part of the image signal sent from the remote communication terminal;

printing means (23) for printing the encoded image signal on a recording sheet (P); and

preregistration means (17) for storing at least one information, the encoding means (18) encoding the image signal prior to printing of the encoded image signal when the information about the remote communication terminal sent from the exchange coincides with the at least one information stored in the preregistration means (17).

3. A communication terminal device (1') of a type receiving an image signal from a remote communication terminal, a plurality of telephone numbers being assigned to the communication terminal device, characterized in that the communication terminal device (1') comprises:

detecting a telephone number (172) called by the remote communication terminal;

encoding means (18) for encoding at least part of the image signal sent from the remote communication terminal;

printing means (23) for printing the encoded image signal on a recording sheet (P); and

preregistration means (17) for storing the plurality of telephone numbers, the encoding means (18) encoding the image signal prior to printing of the encoded image signal when the detected telephone number coincides with one of the plurality of telephone numbers stored in the preregistration means (17).

4. The communication terminal device (1:1') of claim 1, 2 or 3, characterized in that the communication terminal device (1;1') further includes:

means (11) for reducing the image signal sent from the remote communication terminal before the encoding means encodes the image signal; and

means (11) for adding at least one guide line (GL) in the reduced image signal (PL) after the encoding means (18) encodes the reduced image signal.

5. The communication terminal device (1;1') of claim 1, 2, 3 or 4, characterized in that the communication terminal device (1;1') further includes means (11, 23) for printing the information about the remote communication terminal in the form of characters (TN) on a blank part (B) of the recording sheet (P).

6. The communication terminal device (1;1') of any one of claims 1 to 5, characterized in that the encoding means (18) does not encode a predetermined part of the image signal and the printing means (23) prints it out on the recording sheet (P) without encoding.

7. The communication terminal device (1;1') of any one of claims 1 to 6, characterized in that the encoding means (18) encodes all of the image signal.

8. The communication terminal device (1;1') of any one of claims 1 to 7, characterized in that the communication terminal device further includes storage means (17T) for memorizing a code number (173) corresponding to the information (172) about the remote communication terminal and the encoding means (18) encodes the image signal when a user of the communication terminal device (1;1') inputs the code number (173).

9. The communication terminal device (1;1') of claim 8, characterized in that the communication terminal device further includes means (11) for expanding the code number (173) by a factorial system and determining an encoding rule (m) based on the expanded code number.

**10.** A method of receiving an image signal from a remote terminal by a receiving communication terminal device (1), the remote terminal adapted to send first information about the remote terminal to the receiving communication terminal, characterized in that the method comprises the steps of:

A) storing second information about the remote terminal in the receiving communication terminal device (1);
B) detecting the first information during communication procedures performed between the remote terminal and receiving communication terminal device (1) before the receiving communication terminal device accepts the image signal;
C) receiving the image signal from the remote terminal;
D) comparing the first information with the second information;
E) encoding the image signal when the step D) determines that the first information is equal to the second information; and
F) printing the encoded image signal on a recording sheet (P).

**11.** The method of claim 10, characterized in that the method further includes the steps of:

G) reducing the image signal between the steps C) and D); and
H) adding at least one guide line (GL) in the reduced image signal between the steps E) and F).

**12.** The method of claim 11, characterized in that the method further includes the step of printing the first information in the form of characters (TN) on a blank part (B) of the recording sheet (P).

FIG. 1

# FIG. 2

| SECURE MAIL NO. | THIRD PARTY'S NO. | CODE NO. | SCRAMBLE NO. |
|---|---|---|---|
| 0 | 012345678 | 1234 | 3937 |
| 1 | | | |
| 2 | | | |
| 7 | | | |
| 8 | | | |
| 9 | | | |

171  172  173  174  17T

EP 0 821 516 A2

# FIG. 3

```
        ┌──────────────────────┐
        │    SECURE MAILING     │
        └──────────────────────┘
                    │
        ┌───────────┴───────────┐
   NO   ╱     SECURE MAIL        ╲  S11
  ┌─────       SET ?             
  │     ╲                       ╱
  │      └──────────┬──────────┘
  │                 │ YES                    │
  │     ┌───────────┴───────────┐            │
  │     │  RESERVE 1ST VACANT    │           ▼
  │     │  PORTION IN AREA 171   │ S12   ┌─────────────┐
  │     │  WITH SECURE MAIL NO."k"│       │   OTHER     │
  │     └───────────┬───────────┘        │ PROCESSING  │
  │                 │                     └─────────────┘
  │     ┌───────────┴───────────┐
  │  NO ╱   TEL NO. INPUT ?      ╲  S13
  │ ┌───       
  │ │  ╲                        ╱
  │ │   └──────────┬───────────┘
  │ │              │ YES
  │ │  ┌───────────┴───────────┐
  │ │  │  STORE TEL NO. IN AREA │
  │ │  │   172 AT LOCATION      │ S14
  │ │  │ CORRESPONDING TO "k"   │
  │ │  └───────────┬───────────┘
  │ │              │
  │ │  ┌───────────┴───────────┐
  │ │NO╱   4 – DIGIT CODE       ╲  S15
  │ ┌───      NO. INPUT ?       
  │ │  ╲                        ╱
  │ │   └──────────┬───────────┘
  │ │              │ YES
  │ │  ┌───────────┴───────────┐
  │ │  │  PREPARE dec[0123]     │ S16
  │ │  │ FROM 4– DIGIT CODE NO. │
  │ │  └───────────┬───────────┘
  │ │              │
  │ │  ┌───────────┴───────────┐
  │ │  │ STORE dec[0123] IN AREA│
  │ │  │   173 AT LOCATION      │ S17
  │ │  │   CORRES. TO "k"       │
  │ │  └───────────┬───────────┘
  │ │              │
  │ │  ┌───────────┴───────────┐
  │ │  │ CONVERT dec[0123] TO   │ S18
  │ │  │     BINARY "n"         │
  │ │  └───────────┬───────────┘
  │ │              │
  │ │  ┌───────────┴───────────┐
  │ │  │ CHANGE BIT POSITIONS   │
  │ │  │  OF "n" USING INITIAL  │
  │ │  │  CONVERSION "f" TO     │ S19
  │ │  │  PREPARE SCRAMBLE      │
  │ │  │      NO. "m"           │
  │ │  └───────────┬───────────┘
  │ │              │
  │ │  ┌───────────┴───────────┐
  │ │  │ STORE "m" IN AREA 174 AT│ S20
  │ │  │ LOCATION CORRES. TO "k" │
  │ │  └───────────┬───────────┘
  │ │              │
  │ │        ┌─────┴─────┐
  │ │        │    END    │
  │ │        └───────────┘
```

RESERVE 1ST VACANT PORTION IN AREA 171 WITH SECURE MAIL NO."k" — S12

OTHER PROCESSING

TEL NO. INPUT ? — S13

STORE TEL NO. IN AREA 172 AT LOCATION CORRESPONDING TO "k" — S14

4 – DIGIT CODE NO. INPUT ? — S15

PREPARE dec[0123] FROM 4– DIGIT CODE NO. — S16

STORE dec[0123] IN AREA 173 AT LOCATION CORRES. TO "k" — S17

CONVERT dec[0123] TO BINARY "n" — S18

CHANGE BIT POSITIONS OF "n" USING INITIAL CONVERSION "f" TO PREPARE SCRAMBLE NO. "m" — S19

STORE "m" IN AREA 174 AT LOCATION CORRES. TO "k" — S20

# FIG. 4

```
                    START

                      │
                      ▼
         NO   ┌──────────────────┐  S81
        ◄─────┤ CALL RECEIVED?   │
              └──────────────────┘
                      │ YES
                      ▼
         ┌──────────────────────┐ S82
         │    CONNECT LINE      │
         └──────────────────────┘
                      │
                      ▼
         ┌──────────────────────┐ S83
         │     SEND CED         │
         └──────────────────────┘
                      │
                      ▼
         ┌──────────────────────┐ S84
         │     SEND DIS         │
         └──────────────────────┘
                      │        S85
                      ▼
         ┌──────────────────┐  NO
         │   TSI/DCS        ├───────────┐           S86
         │   DETECTED ?     │           ▼
         └──────────────────┘   ┌──────────────────┐ NO
                      │ YES     │   TIME OVER ?    ├────┐
                      ▼         └──────────────────┘    │
         ┌──────────────────────┐ S87       │ YES       │
         │     SEND CFR         │           │           │
         └──────────────────────┘           │           │
                      │   S88               │           │
                      ▼                                  │
         ┌──────────────────┐  NO                        │
         │ IS TEL NO. IN TSI├───────────┐   S89          │
         │ THE REGISTERED   │           ▼                │
         │      ONE?        │   ┌──────────────────┐     │
         └──────────────────┘   │  PRINT IT OUT    │     │
                      │ YES     │   NORMALLY       │     │
                      ▼         └──────────────────┘     │
         ┌──────────────────────┐ S90       │            │
         │  PRINT IT OUT AFTER  │           │            │
         │     SCRAMBLING       │           │            │
         └──────────────────────┘           │            │
                      │◄───────────────────┘            │
                      ▼                                  │
         ┌──────────────────────┐ S91                   │
         │ SEND & RECEIVE SIGNALS│                       │
         │ FOR POST PROCEDURES  │                        │
         └──────────────────────┘                        │
                      │◄────────────────────────────────┘
                      ▼
         ┌──────────────────────┐ S92
         │  DISCONNECT LINE     │
         └──────────────────────┘
                      │
                      ▼
                    END
```

# FIG. 5

SECURE MAIL
RECEPTION

S22 — FIND OUT FAX NO. OF
CALLING STATION

S23 — READ "m" FROM
TABLE 17T

S24 — EXPAND "m" TO
FACTORIAL SYSTEM &
STORE COEFFICIENTS
IN ARRAY"fac[01234567]"

S25 — PREPARE SCRAMBLE
CONVERSION TABLE
ARRAY "scr[01234567]"
ACCORDING TO
"fac[01234567]"

S26 — PRINT PREDETERMINED
NUMBER OF LINES ON 1ST
PAGE WITHOUT
SCRAMBLING

DECODE 1 LINE — S27

THINNING ? — S28 — YES

NO

S29 — REDUCE IN MAIN
SCANNING
DIRECTION

S30 — PAIR DATA

S31 — SCRAMBLE DATA
ACCORDING TO
scr[01234567]

S32 — INSERT GUIDE
LINES AFTER
EACH
PREDETERMINED
DOTS

S33 — PRINT FINAL
FORM OF DATA

NO — NO MARE
DATA ? — S34

YES

END

# FIG. 6

```
        ┌─────────┐
        │  START  │
        └─────────┘
             │
             ▼
    ┌──────────────────┐
    │   INPUT "m"       │──── S101
    └──────────────────┘
             │
             ▼
    ┌──────────────────┐
    │   i ← 0           │──── S102
    └──────────────────┘
             │
     ┌──────▼───────────┐
    │  fac[i]=m%(i+1)   │──── S103
    └──────────────────┘
             │
             ▼
    ┌──────────────────┐
    │   m/(i+1)         │──── S104
    └──────────────────┘
             │
             ▼
    ┌──────────────────┐
    │   i++             │──── S105
    └──────────────────┘
             │
             ▼           S106
         ╱──────────╲
  YES ──╱   i<8 ?    ╲
         ╲──────────╱
             │ NO
             ▼
        ┌─────────┐
        │   END   │
        └─────────┘
```

# FIG. 7A

| j | i | UNIT NO. 0 | 1 | 2 | 3 | 4 | 5 | 6 | 7 |
|---|---|---|---|---|---|---|---|---|---|
| 1 | 1 | 1 | 2 | 3 | 4 | 5 | 6 | 7 | 0 |
| 0 | 2 | 1 | 2 | 3 | 4 | 5 | 6 | 7 | 0 |
| 0 | 3 | 3 | 2 | 1 | 4 | 5 | 6 | 7 | 0 |
| 4 | 4 | 4 | 2 | 1 | 3 | 5 | 6 | 7 | 0 |
| 2 | 5 | 4 | 2 | 1 | 3 | 5 | 6 | 7 | 0 |
| 5 | 6 | 4 | 2 | 6 | 3 | 5 | 1 | 7 | 0 |
| 0 | 7 | 4 | 2 | 6 | 3 | 5 | 7 | 1 | 0 |
| RESULT | | 0 | 2 | 6 | 3 | 5 | 7 | 1 | 4 |

# FIG. 7B

UNIT NO.

| BEFORE CONVERSION | | AFTER CONVERSION |
|---|---|---|
| 0 | ⟶ | 0 |
| 1 | ⟶ | 2 |
| 2 | ⟶ | 6 |
| 3 | ⟶ | 3 |
| 4 | ⟶ | 5 |
| 5 | ⟶ | 7 |
| 6 | ⟶ | 1 |
| 7 | ⟶ | 4 |

# FIG. 8

```
                    ┌───────────┐
                    │   START   │
                    └─────┬─────┘
                          │
                    ┌─────▼─────┐
                    │    i=0    │────  S201
                    └─────┬─────┘
            ┌─────────────┤
            │       ┌─────▼─────┐
            │       │ sac[i]=IVi│────  S202
            │       └─────┬─────┘
            │       ┌─────▼─────┐
            │       │    i++    │────  S203
            │       └─────┬─────┘
            │             │          S204
            │          ╱──▼──╲
        YES │        ╱  i<8 ? ╲
            └───────◄           ►
                     ╲         ╱
                      ╲──┬──╱
                         │ NO
                   ┌─────▼─────┐
                   │    i=1    │────  S205
                   └─────┬─────┘
          ┌──────────────┤
          │      ┌───────▼────────┐
          │      │   EXCHANGE     │
          │      │ CONTENTS OF scr[i]│──  S206
          │      │ WITH CONTENTS  │
          │      │ OF scr[fac[ i ]]│
          │      └───────┬────────┘
          │        ┌─────▼─────┐
          │        │    i++    │────  S207
          │        └─────┬─────┘
          │              │         S208
          │           ╱──▼──╲
      YES │         ╱  i<8 ? ╲
          └────────◄          ►
                    ╲        ╱
                     ╲──┬──╱
                        │ NO
                  ┌─────▼─────┐
                  │    END    │
                  └───────────┘
```

# FIG. 9A

1728

# FIG. 9B

1664

# FIG. 9C

⬡ :4 UNITS

⬡✕⬡ :1 BLOCK(=8 UNITS)

GL          GL

# FIG. 9D

# FIG. 10

# FIG. 11

# FIG. 12

```
        CREATION OF
     DESCRAMBLED COPY
            │
            ▼
      S41 ──────── NO
   ◇ DESCRAMBLE MODE ◇──────┐
            │ YES           ▼
            ▼          ┌──────────┐
      S42              │ NORMAL   │
 NO                    │  COPY    │
◇ CODE NO. INPUT ? ◇   └──────────┘
            │ YES
            ▼
S43 ┌─────────────────────────┐
    │ PREPARE dec[0123] USING │
    │   4 – DIGIT CODE NO.    │
    └─────────────────────────┘
            │
            ▼
S44 ┌─────────────────────────┐
    │   CONVERT dec[0123] TO  │
    │   BINARY "n(14 BITS)"   │
    └─────────────────────────┘
            │
            ▼
S45 ┌─────────────────────────┐
    │  PREPARE SCRAMBLE NO.   │
    │  "m" BY CHANGING BIT    │
    │      POSITIONS OF       │
    │ "n(14 BITS)" USING INITIAL │
    │    CONVERSION "f"       │
    └─────────────────────────┘
            │
            ▼
S46 ┌─────────────────────────┐
    │     EXPAND "m" TO       │
    │  FACTORIAL SYSTEM &     │
    │  STORE COEFFICIENTS IN  │
    │  ARRAY"fac[01234567]"   │
    └─────────────────────────┘
            │
            ▼
S47 ┌─────────────────────────┐
    │    CREATE SCRAMBLE      │
    │  TABLE  scr[01234567]   │
    │       ACCORDING         │
    │   TO fac[01234567]      │
    └─────────────────────────┘
```

```
            ▼
    ┌──────────────────┐
    │  SCAN ONE LINE   │ S48
    └──────────────────┘
            │
            ▼
    ┌──────────────────┐
    │ ELIMINATE GUIDE  │ S49
    │      LINES       │
    └──────────────────┘
            │
            ▼
    ┌──────────────────┐
    │   DESCRAMBLE     │
    │    ACCORDING     │ S50
    │ TO scr [01234567]│
    └──────────────────┘
            │
            ▼
    ┌──────────────────┐
    │    REARRANGE     │
    │   PAIRINGS TO    │ S51
    │  ORIGINAL ONES   │
    └──────────────────┘
            │
            ▼
    ┌──────────────────┐
    │ PRINT RESULTING  │ S52
    │      DATA        │
    └──────────────────┘
            │
            ▼
 NO      S53
◇───── END OF ──────◇
      DOCUMENT ?
            │ YES
            ▼
        ┌───────┐
        │  END  │
        └───────┘
```

# FIG. 13

EP 0 821 516 A2

FACSIMILE DEVICE
(SIGNAL RECEIVING STATION)

# FIG. 14

START

S300 — ANY CALL ? — NO

YES

S301 — RINGING DETECTED ? — NO

YES

ESTABLISH LINE (PRIMARY RESPONSE) — S302

CALLER ID DETECTED ? — NO

S303 — YES

STORE CALLER'S TEL NO. & DIALED TEL NO. INTO MEMORY — S304

DISCONNECT LINE — S305

S306 — RINGING DETECTED ? — NO

YES

ESTABLISH LINE (PRIMARY RESPONSE) — S307

SEND CED — S308

SEND DIS — S309

DCS DETECTED ? — NO

S310 — YES

SEND CFR — S311

IS RECEIVED TEL NO. THE ONE FOR CODING ? — S312 — NO

YES — IS CALLER'S TEL NO. THE ONE FOR CODING ? — S314

NO

PRINT IT OUT NORMALLY — S315

YES

PRINT AFTER SCRAMBLING — S313

SEND & RECEIVE POST − MESSAGE SIGNALS — S316

DISCONNECT LINE — S317

END

# FIG. 15

1′
FACSIMILE DEVICE

4
EXCHANGE

POLARITY INVERSION(S300)

TERMINAL ACTIVATION SIGNAL(S301)

PRIMARY RESPONSE(S302)

CALLER ID (MODEM SIGNAL)(S303)

RECEPTION COMPLETE SIGNAL(305)

MORE THAN 0.3 SEC

RINGING(S306)

SECONDARY RESPONSE (307)

RESTORE POLARITY (S307)

COMMUNICATION